(19) Europäisches Patentamt
European Patent Office
Office européen des brevets

(11) **EP 4 552 607 A1**

(12) **EUROPEAN PATENT APPLICATION**

(43) Date of publication:
**14.05.2025 Bulletin 2025/20**

(21) Application number: 24209863.0

(22) Date of filing: **30.10.2024**

(51) International Patent Classification (IPC):
*A61C 5/70* (2017.01)

(52) Cooperative Patent Classification (CPC):
**A61C 5/70; A61C 13/081**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.11.2023 KR 20230152393**

(71) Applicant: BIOCETEC CO., LTD.
**Seoul 08506 (KR)**

(72) Inventors:
• YIM, Heung Bin
  06065 Seoul (KR)
• YOON, Sung Hee
  06649 Seoul (KR)
• JU, Hyung Jin
  10218 Seoul (KR)
• LIM, Hyun Soo
  07741 Seoul (KR)

(74) Representative: **Seyer & Nobbe Patentanwälte
PartmbB
Mülheimer Straße 210
47057 Duisburg (DE)**

(54) **ARTIFICIAL CROWN AND METHOD FOR MANUFACTURING THE SAME**

(57)    Disclosed are an artificial crown with a structure capable of providing a mechanical bonding ability during a process of bonding a cement on an inner surface and a method of manufacturing the same. The artificial crown is fitted and bonded on a prepared tooth, comprises a prosthesis with retention groove in which the prepared tooth is inserted; and a plurality of pattern sections formed to a predetermined depth on an inner surface of the prosthesis and allowing an adhesive to be received in order to bond the prosthesis on the prepared tooth.

Fig. 1

(a)    (b)

(c)    (d)

EP 4 552 607 A1

**Description**

CROSS-REFERENCE TO RELATED APPLICATION

This application claims priority from Korean Patent Application No. 10-2023-0152393 filed with Korean Intellectual Property Office on November 07, 2023, the entire contents of which are incorporated herein by reference.

FIELD OF THE INVENTION

The inventive concept relates to an artificial crown and a method of manufacturing the same, and more particularly, to an artificial crown capable of providing mechanical bonding strength during a process of bonding a ceramic on an inner surface and a method of manufacturing the same.

BACKGROUND

Generally, a tooth may be damaged by caries or an accident. An artificial tooth may be used for recovering function of the damaged tooth and protecting the tooth.

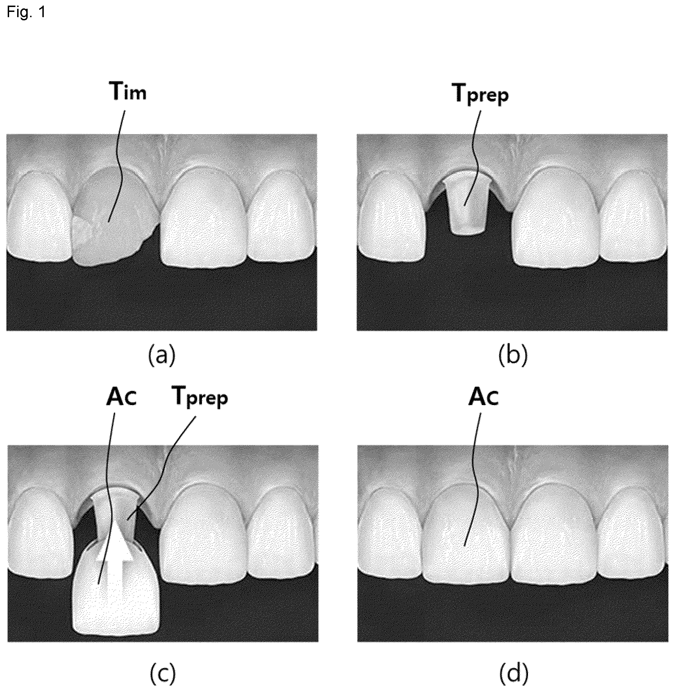

FIGS. 1(a) through 1(d) are drawings illustrating a preparation process of a damaged tooth and a procedure for fitting an artificial crown.
For a damaged tooth $T_{im}$ of FIG. 1a by caries or an accident, as shown in FIG. 1(b), a prepared tooth $T_{prep}$ for the artificial crown procedure may be prepared by performing a preparation process to shape and contour the damaged tooth.
The artificial crown $A_c$ of FIG. 1(c) may be formed with appropriate shape and size to fit the prepared tooth and be formed of biocompatible materials such as metal or ceramic. As shown in FIG. 1(d), the artificial crown $A_c$ may be bonded on the prepared tooth using an adhesive cement such that the artificial crown procedure for the damaged tooth is completed.
If bonding strength between the adhesive cement and the artificial crown is weak, it may be occurred to the artificial crown frequently coming off after the procedure. This issues not only may cause psychological discomfort for the patient but also reduce effectiveness of the treatment and lead to the need for further procedures.
As a conventional method for improving the bonding strength between the artificial crown and the adhesive cement, an idea has been introduced to enhance the bonding strength between the crown and the cement by applying sandblasting to the inner surface of the shaped crown. Such treatment method creates micro irregularities on the surface of a sintered material to enhance the bonding strength by increasing a contact area to the cement.
However, such treatment method may cause cracks or fractures in the sintered tooth material, and the physical impact generated during the sandblasting or coating processes can damage the sintered material.

As a result, durability and lifespan of the crown may be significantly reduced. Further, there is a possibility that the bonding strength of a bonding surface created by the sandblasting may gradually weaken due to the difference in the coefficients of thermal expansion between the ceramic and the cement. Consequently, a ceramic bonding interface formed by the sandblasting may be decreased in stability.

SUMMARY

The inventive concept is originated in consideration of the aforementioned issues, provides a shaped artificial crown and a method of manufacturing the same which ensures treatment stability by offering mechanical bonding strength during a process of bonding the inner surface of the shaped artificial crown and the cement.
The artificial crown of the inventive concept may be fitted and bonded on a prepared tooth, include a prosthesis with retention groove in which the prepared tooth is inserted; and a plurality of pattern sections formed to extend into a predetermined depth and inclined on an inner surface of the prosthesis, in order to receive an adhesive for bond the prosthesis on the prepared tooth. The plurality of the pattern sections may be formed to extend into a depth of 0.01mm through 2mm on the inner surface of the retention groove of the prosthesis, respectively.
The plurality of the pattern section may include a lingual pattern section bonded on a lingual side of the prepared tooth; and a labial pattern section bonded on a labial side of the prepared tooth, and a depth of the lingual pattern section may be formed to be deeper than a depth of the labial pattern section.
The method of manufacturing an artificial crown of the inventive concept may include forming a prosthesis in a predetermined shape using an injection molding process, wherein the prosthesis may be formed of ceramic or metal materials: and forming a pattern section by applying a laser engraving on the inner surface of the prosthesis.

BRIEF DESCRIPTION OF THE DRAWINGS

FIGS. 1a through 1d are drawings illustrating process of a damaged tooth and a procedure for fitting an artificial crown.
FIG. 2 is a perspective view illustrating an artificial crown according to an embodiment of the inventive concept.
FIG. 3 is a sectional view of the FIG. 2
FIG. 4 is a sectional view illustrating an artificial crown according to another embodiment of the inventive concept.
FIG. 5 is a flowchart illustrating a manufacturing process of an artificial crown according to an embodiment of the inventive concept.

FIG. 6 is a schematic partial sectional view illustrating a laser apparatus which perform a laser engraving to the artificial crown.

DETAILED DESCRIPTION OF THE EMBODIMENTS

An artificial crown and a method of manufacturing the same according to the inventive concept of embodiments will be described below in more detail with reference to the accompanying drawings. In denoting reference numerals to elements of each drawing, the same reference numerals denote the same elements though the elements are shown in different drawings. In describing embodiments of the inventive concepts, descriptions for universally known elements or functions may be left out when the descriptions make obscure essential points of the inventive concepts.

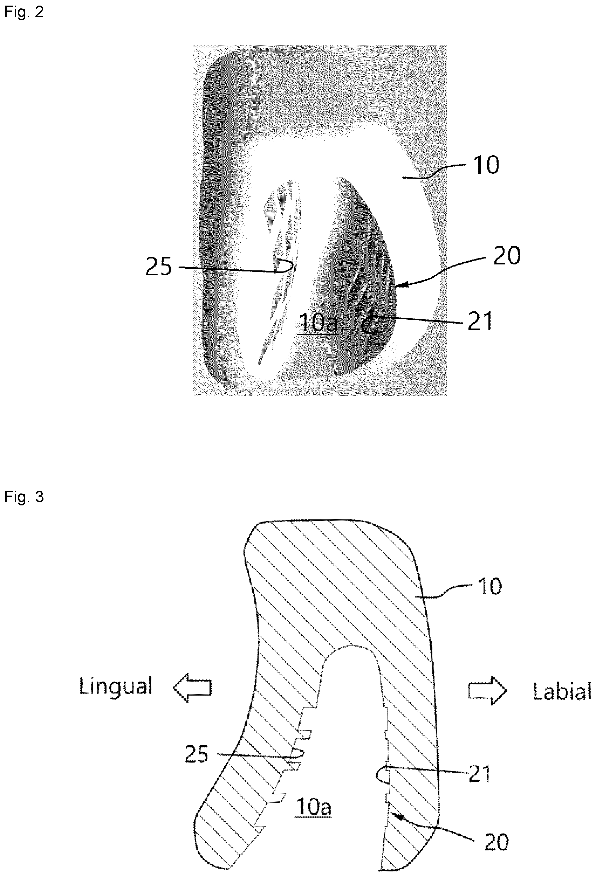

FIG. 2 is a perspective view illustrating an artificial crown according to an embodiment of the inventive concept, and FIG. 3 is a sectional view of the FIG. 2.

Referring to FIGS. 2 and 3, an artificial crown of an embodiment of the inventive concept may fitted and bonded on a prepared tooth, and include a prosthesis 10 and a plurality of pattern sections 20. The prosthesis may have a shape of a tooth after recovery. The prosthesis may have a retention groove 10a in which the prepared tooth of FIG. 1(a) to be inserted. The prosthesis may be formed of ceramic or metallic materials and the outer shape and the retention groove 10a may be formed by the injection molding process. The plurality of the pattern sections 20 may be formed to extend into a predetermined depth on the inner surface of the retention groove 10a of the prosthesis 20, and hold an adhesive for bonding the prosthesis 10 on the prepared tooth. Through the preparation of the plurality of the pattern sections 20, the pattern sections 20 are formed to enhance the bonding strength between the prepared tooth and the prosthesis by increasing the bonding strength of the adhesive to the pattern section 20, even without deforming the overall shape of the retention groove 10a of the artificial crown.

The plurality of the pattern sections 20 may be formed by a laser engraving process. The plurality of the pattern section 20 may be formed to extend into a depth of 0.01mm through 2mm on the inner surface of the retention groove of the prosthesis, respectively. If the depth of the pattern section 20 is less than 0.01mm, the bonding strength may weaken. On the other hand, if the depth of the pattern section 20 is formed to exceed 2mm, cracks or surface defects may occur in the prosthesis 100.

In addition, the plurality of the pattern sections 20 may include a labial pattern section 21 and a lingual pattern section 25. The labial pattern section 21 may be formed on the inner surface of the retention groove 10a, which is joined to the labial side of the prepared tooth. The lingual pattern section 25 may be formed on the inner surface of the retention groove 10a, which is joined to the lingual side of the prepared tooth. A depth of the lingual pattern section 25 may be formed to be deeper than a depth of the labial pattern section 21.

This is designed considering that the force applied to the tooth in the lingual direction is greater than the force applied in the labial direction such as during brushing, after an artificial crown procedure. Since the bonding strength of the lingual pattern section 25 is relatively stronger, it can be resolve or minimize the issue of reduced bonding strength of the artificial crown when the external force is applied in the lingual direction to the prosthesis after the procedure. Further, it can stabilize shade and translucency in the labial direction. In other words, if the depth of the laser engraving on the labial side is deep, it may lead to surface defects due to differences in shade and translucency reflected in the labial direction

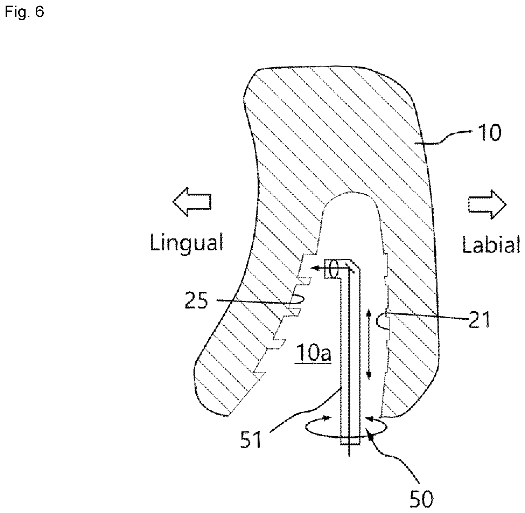

The plurality of the pattern sections 20 may be formed to be inclined at a predetermined intended entry angle by the laser engraving. The inclination angle may be adjusted by controlling the angle between the prosthesis and the laser engraving apparatus 50 of FIG. 6.

FIG. 3 illustrates an example where an engraving angle direction of the plurality of the pattern sections 20 formed on the adhesive interface of the inner surface is nearly perpendicular to the surface (the adhesive interface) on which the pattern is formed. In this case, since the angle between the engraving direction of the pattern 20 and the adhesive interface is nearly perpendicular, the amount of the undercut cement formed based on a removal direction of a prosthetic crown may increase, which can enhance the adhesive strength (mechanical bonding strength).

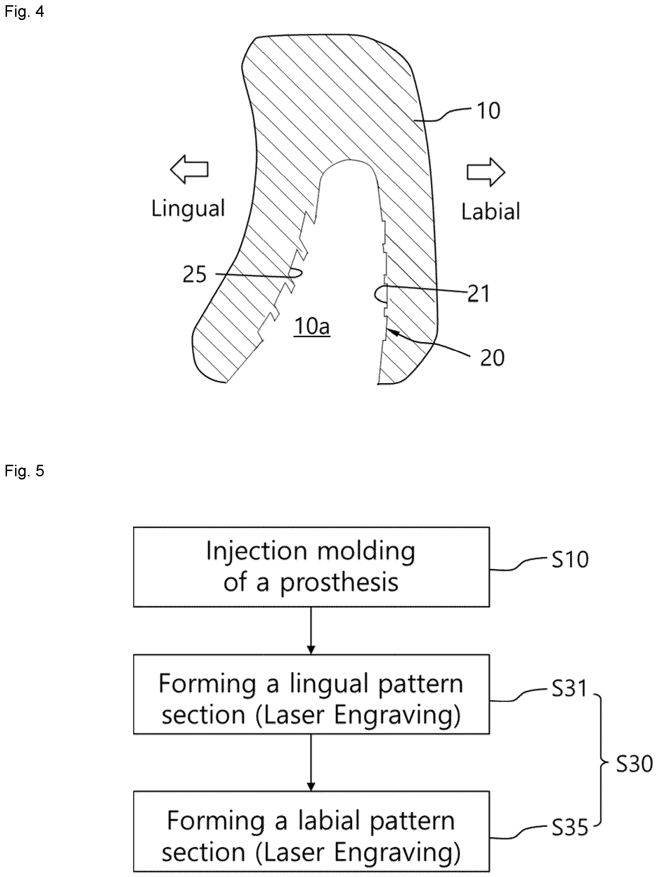

FIG. 4 is a sectional view illustrating an artificial crown according to another embodiment of the inventive concept, where the lingual pattern section 25 among the plurality of the pattern sections 20 may be inclined toward an opening end direction of the retention groove 10a. In this case, there is an advantage for the pattern section 20 to be formed by engraving easy. It is also possible for the plurality of the pattern sections 20 to be formed with an incline in the upward direction of the retention groove 10a (inclined in the opposite direction to the incline shown in FIG. 4)

Considering the relationship among the laser engraving area of the pattern section 20, the adhesive stability and the total area of the adhesive interface, the following Equation 1 may be satisfied.

$$< \text{Equation 1} >$$
$$0.2 \leq \frac{A_{(Labial+Lingual)}}{A_{all}} \leq 0.95$$
$$0.1 \leq \frac{A_{Labial}}{A_{all}},$$
$$0.1 \leq \frac{A_{Lingual}}{A_{all}}$$

Here, $A_1$ represents the total area of the adhesive interface where the pattern section is not formed on the inner surface of the retention groove of the prosthesis, $A_{Labial}$ represents the area of the laser engraving pattern of the labial pattern section 21, $A_{Lingual}$ represents the area of the laser engraving pattern of the lingual pattern section 25, and $A_{all}$ represents the total area of the adhesive interface inside the retention groove.

In Equation 1, if the total laser engraving area is less than 0.2, the adhesive area with the cement may be reduced, leading to lower adhesive strength. If the laser engraving area is formed to be less than 0.1 on either the labial side or lingual side, the adhesive strength may only be maintained on one side, leading to reduced adhesive stability. In contrast, if the laser engraving area is formed within the range of the equation, the adhesive strength on both of the labial side and lingual side can be maintained, effectively increasing adhesive stability.

FIG. 5 is a flowchart illustrating a manufacturing process of an artificial crown according to an embodiment of the inventive concept, and FIG. 6 is a schematic partial sectional view illustrating a laser apparatus which perform a laser engraving to the artificial crown in FIG. 5.

Referring to FIGS. 5 and 6, the method of manufacturing an artificial crown according to an embodiment of the inventive concept may include a step S10 of injection molding a prosthesis 10, and a step S30 of forming a plurality of pattern sections by laser engraving on the inner surface of the prosthesis 10.

Examining the step S10, the prosthesis may be formed of ceramic or metallic materials and formed into a shape with a predetermined outer shape and a retention groove through the injection molding process.

Examining more specifically the process of forming the plurality of pattern sections 20, the laser engraving may be performed while a probe 51 of the laser apparatus 50 is inserted into the retention groove 10a. At this time, by applying a laser on the lingual side inner surface of the retention groove 10a while raising and lowering the probe 51, the lingual pattern section 25 may be formed S31. And then, by applying a laser on the labial side inner surface of the retention groove 10a while raising and lowering the probe 51 after changing the direction of the probe 51 to the labial side, the labial pattern section 21 may be formed S35. Here, it is possible to reverse the order of the step of S31 and the step of S35 during processing.

As described above, it is possible to precisely manufacture the depth and angle of the pattern sections according to the intended specifications by providing a plurality of pattern sections through the laser engraving process. Although FIG. 6 illustrates an embodiment where the laser apparatus 51 includes a probe 51, it is not limited to this configuration. In other words, the laser apparatus 51 may be directly apply laser radiation without the probe 51.

The artificial crown of the inventive concept has a plurality of the pattern sections on the inner surface of the prosthesis such that a contact area can be enlarged during the process of bonding the cement to the prepared tooth. Therefore, the mechanical bonding strength between the prepared tooth and the artificial tooth can be enhanced to improve treatment stability.

Further, the method of manufacturing the artificial crown of the inventive concept may precisely form small sized patterns within a few millimeters by applying laser engraving process to the prosthesis molded through injection molding process.

While the inventive concept has been described with reference to example embodiments, it will be apparent to those skilled in the art that various changes and modifications may be made without departing from the spirit and scope of the inventive concept. Thus, the scope of the inventive concept is to be determined by the broadest permissible interpretation of the following claims and their equivalents.

## Claims

1. An artificial crown comprising:

   an prosthesis fitted and bonded on a prepared tooth, having a retention groove in which the prepared tooth is inserted; and
   a plurality of pattern sections formed to extend into a predetermined depth and inclined on an inner surface of the prosthesis, in order to receive an adhesive for bonding the prosthesis on the prepared tooth.

2. The artificial crown of claim 1, wherein the plurality of the pattern sections is formed to extend into a depth of 0.01mm through 2mm on the inner surface of the retention groove of the prosthesis, respectively.

3. The artificial crown of claim 2, wherein the plurality of the pattern sections comprises,

   a lingual pattern section bonded on a lingual side of the prepared tooth;
   a labial pattern section bonded on a labial side of the prepared tooth,
   wherein a depth of the lingual pattern section is formed to be deeper than a depth of the labial pattern section.

4. A method of manufacturing the artificial crown of claim 1 comprising:

   molding a prosthesis in a predetermined shape using an injection molding process: and
   forming the plurality of the pattern sections by applying a laser engraving on the inner surface of the prosthesis,
   wherein the prosthesis formed of ceramic or metal materials.

5. The method of claim 4, wherein the plurality of the pattern sections is formed to extend into a depth of 0.01mm through 2mm on the inner surface of the retention groove of the prosthesis, respectively.

6. The method of claim 5, wherein the plurality of the pattern sections comprises,

a lingual pattern section bonded on a lingual side of the prepared tooth;
a labial pattern section bonded on a labial side of the prepared tooth,
wherein a depth of the lingual pattern section is formed to be deeper than a depth of the labial pattern section.

Fig. 1

**Tim**

(a)

**Tprep**

(b)

**Ac** **Tprep**

(c)

**Ac**

(d)

Fig. 2

Fig. 3

Fig. 4

Fig. 5

Fig. 6

Lingual

Labial

10

25

21

10a

51

50

Europäisches
Patentamt

European
Patent Office

Office européen
des brevets

# EUROPEAN SEARCH REPORT

**Application Number**

EP 24 20 9863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/307536 A1 (SHINYA AKIKAZU [JP] ET AL) 10 October 2019 (2019-10-10) * paragraph [0024]; figures 1,3 * ----- | 1-6 | INV. A61C5/70 |
| X | KR 2022 0127567 A (UNIV YONSEI IACF [KR]) 20 September 2022 (2022-09-20) * paragraphs [0052] - [0063]; figures 3-10 * ----- | 1-6 | |
| X | KR 2019 0070019 A (DIBODS CO LTD [KR]) 20 June 2019 (2019-06-20) * paragraph [0023]; figure * * ----- | 1-6 | |

**TECHNICAL FIELDS SEARCHED (IPC)**

A61C

The present search report has been drawn up for all claims

| Place of search | Date of completion of the search | Examiner |
|---|---|---|
| Munich | 3 March 2025 | Haller, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9863

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| US 2019307536 A1 | 10-10-2019 | AU 2017290344 A1 | 17-01-2019 |
| | | CN 109328041 A | 12-02-2019 |
| | | EP 3479794 A1 | 08-05-2019 |
| | | JP WO2018003286 A1 | 04-04-2019 |
| | | KR 20190011758 A | 07-02-2019 |
| | | US 2019307536 A1 | 10-10-2019 |
| | | WO 2018003286 A1 | 04-01-2018 |
| KR 20220127567 A | 20-09-2022 | NONE | |
| KR 20190070019 A | 20-06-2019 | NONE | |

EPO FORM P0459

For more details about this annex : see Official Journal of the European Patent Office, No. 12/82

**REFERENCES CITED IN THE DESCRIPTION**

**Patent documents cited in the description**

- KR 1020230152393